# EUROPEAN PATENT APPLICATION

(11) **EP 4 627 981 A1**
(43) Date of publication of application: **08.10.2025**
(21) Application number: 25167623.5
(22) Date of filing: 01.04.2025
(51) Int. Cl.: A47J 37/07

(54) **ELECTRIC BARBECUE, IN PARTICULAR BUILT-IN OR TABLETOP ELECTRIC BARBECUE SUITABLE FOR INDOORS OR OUTDOORS USE**

(30) Priority: 02.04.2024 IT 202400007216
(71) Applicant: SMEG S.p.A., 42016 Guastalla (RE) (IT)
(72) Inventor: DALL'OGLIO, Alberto, 42016 GUASTALLA (RE) (IT); MASTILOVIC, Nebojsa, 42016 GUASTALLA (RE) (IT)
(74) Representative: Studio Torta S.p.A.

(57) **Abstract**

An electric barbecue, in particular a built-in or tabletop electric barbecue suitable for indoor or outdoor use; wherein the electric barbecue comprises: a grill or several grills placed side by side, each grill comprising an outer cooking face and an inner face; at the inner face of each grill, an electric heating element being provided, preferably independently controlled; a box structure housing the at least one electrical heating element and equipped with an upper opening where the at least one grill is arranged; wherein the box structure is a double tank structure comprising: an outer tank; an inner tank housed in the outer tank; insulation material between the inner tank and the outer tank.

## Description

### CROSS-REFERENCE TO RELATED APPLICATIONS

This patent application claims priority from Italian patent application no. 102024000007216 filed on April 2, 2024, the entire disclosure of which is incorporated herein by reference.

### Technical field

The reference technical field of this invention relates to electric barbecues, in particular to built-in or tabletop electric barbecues that can be used not only indoors but also outdoors. Electric barbecues are devices for cooking food in which there is at least one cooking grill that is heated by an electric heating element. The electric heating of the grill, and the fact that the barbecue can also be used outdoors in built-in or tabletop mode, generate particular issues in relation to ordinary gas barbecues, and this invention will address one of these problems by offering an innovative solution.

### State of the art

Electric barbecues are now known that are also suitable for outdoor use in built-in or tabletop mode. These barbecues, like all known barbecues, comprise a grill or several grills placed side by side to create a cooking surface. Each grill thus comprises an outer cooking face and an opposite inner face. A special feature of electric barbecues is the fact that there is an electric heating element at the inner face of each grill. If there are several grills, it is known to control the corresponding electric heating elements independently.

The grill or grills are supported by a structure or frame that can have various shapes. WO2018081766A1 shows a two-plate electric barbecue with a box-shaped structure or frame housing the electric heating elements.

### Description of the invention

On the basis of this known technique, one purpose of this invention is to produce an electric barbecue, in particular a built-in or tabletop electric barbecue that can be used outdoors or indoors, which has innovative features compared to similar known electric barbecues, for example compared to the electric barbecue described in WO2018081766A1.

The starting point of this invention is thus an electric barbecue comprising a grill or several grills placed side by side, wherein each grill comprises an outer cooking face and an inner face. An independently controlled electric heating element is provided at the inner face of each grill to independently control the temperature of the individual grills. The electric heating elements are housed in a box structure with an upper opening where the grill or grills are arranged. The box structure comprises a bottom wall and side walls orthogonal to the bottom wall. The box structure is sized to house one or more grease drip pan (which will be mentioned below) . This box body is configured, in particular, to be built into a piece of furniture or other support or to be placed directly on a table. Precisely in order to make the electric barbecue suitable for being built in or placed on a tabletop, it is necessary to reduce the heat that the electric barbecue itself produces, i.e. the heat that the box structure can exchange with the furniture where it is built in or with the table on which it is placed. To this end, in an innovative manner according to the main aspect of this invention, it is envisaged that the box structure is a double tank structure comprising:
- an outer tank, designed for coming into contact with the furniture or table;
- an inner tank housed in the outer tank, designed to house the electric heating element/s;
- insulation material between the inner tank and the outer tank.

The insulation material is preferably in the form of panels, e.g. glass wool panels or other materials suitable for creating a thermal barrier, which essentially cover the entire outer surface of the inner tank, i.e. the outer faces of the bottom wall and the side walls orthogonal to the bottom wall. Even more preferably, these insulation panels are in direct contact with the above-mentioned outer surfaces of the inner tank walls.

A user-operable control device is preferably provided for each electric heating element to set the cooking temperature of the corresponding grill. Even more preferably, this or these control devices are made in the form of one or more rotary knobs. Even more preferably, each rotary knob can be equipped with an LED backlit ring where, for example, each backlit ring is configured to switch from a first colour while the corresponding grill is heating up to a second colour when the set temperature is reached.

Each grill can preferably be lifted from the box structure to access one or more grease drip pans that are housed in the inner tank below the corresponding grills. Even more preferably, each grease drip pan can be made of dishwasher-safe stainless steel and each can be lifted in turn from the box structure in which it merely rests on the bottom wall.

To facilitate access to the grease drip pan or, in general, to the inside of the box structure, each electric heating element is preferably rotatably coupled to the box structure so that it can move from a position of use parallel to the corresponding grill (supported by special batten elements) to a position of cleaning tilted upwards.

A temperature sensor is preferably provided for each grill, whereby the temperature sensor is configured to control the electric heating elements to maintain a constant cooking temperature as set by the user.

Raised splash guard edges are preferably provided at the upper opening of the box structure to act as vertical extensions of the inner tank edges beyond the grills.

As is known, the grill or grills can be open ones, i.e. having openings and multiple sloping surfaces to direct grease towards the openings, and/or closed ones, i.e. having a flat outer surface with no openings. These grills can preferably be made of die-cast aluminium coated with non-stick material.

Each electric heating element present is preferably made in the form of a coil running essentially along the inner face of the corresponding grill. Even more preferably, the inner wall of each grill is equipped with housing channels for the coil electric heating element.

The box structure is preferably equipped with a drain hole also configured to be connected to a water drainage network to facilitate washing the inner surface of the inner tank.

The coupling between the inner tank and outer tank is preferably sealed against liquids, e.g. the coupling is made by welding the edges of the inner tank to the outer tank.

The inner and/or outer tank are preferably made of stainless steel.

According to one embodiment of the invention, the tanks are rectangular in shape and the outer tank along at least one direction is larger than the inner tank. In this sense, at least one partition wall is provided in the outer tank to separate the area where the inner tank is housed from the rest of the outer tank. The area of the outer tank not occupied by the inner tank is configured to house the electronic control unit of the electric barbecue, and, above this area, there are the control devices for the electric heating elements. In this example, the outer tank preferably includes an opening door for inspecting the area of the inner tank housing the electronic control unit of the electric barbecue. There can, preferably, be a gap, purposefully left empty as an additional layer of air insulation, between the partition wall (and, in general, the walls of the outer tank) and the insulation material.

The electric barbecue may preferably comprise a movable lid coupled to the box structure, in which the lid moves between an open position, in which the user can access the at least one grill, and a closed position, in which it creates a closed cooking chamber around the at least one grill. Even more preferably, the lid is a double-lid comprising:
- a wall or outer shell;
- a wall or inner shell;
- insulation material between the internal wall and the external wall.

In this example, the lid insulation material is preferably glass wool. Even more preferably, the external wall of the lid is made of stainless steel and the internal wall of the lid is made of dark enamelled stainless steel.

### List of figures

Further features and advantages of this invention will be apparent from the following description of a non-limiting embodiment thereof, with reference to the figures of the accompanying drawings, wherein:
- Figure 1 is a schematic view of an embodiment of a built-in or tabletop electric barbecue;
- Figure 2 shows some elements of the barbecue in Figure 1;
- Figure 3 is a schematic view of the barbecue in Figure 1 from which some elements have been removed;
- Figure 4 shows some elements of the barbecue in Figure 1 that form an innovative structure of the electric barbecue of Figure 1 according to this invention;
- Figure 5 is a cross-section view of the barbecue in Figure 1.

### Description of one embodiment of the invention

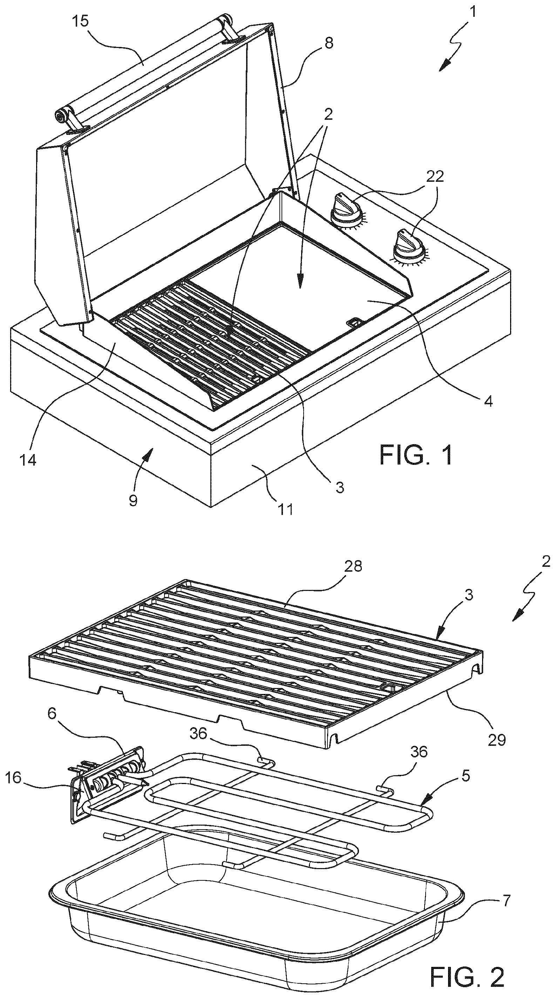

Referring to the attached figures, Figure 1 shows a schematic view of an embodiment of an electrical barbecue 1 according to this invention. This barbecue, like all barbecues according to this invention, can be used in built-in or tabletop mode. In addition, barbecues according to this invention can be used not only indoors but also outdoors. Returning to the example in Figure 1, the barbecue shown comprises an open grill 3 (equipped with openings and multiple sloping surfaces to direct the grease towards the openings) and a closed grill 4 (equipped with a flat outer surface with no openings) placed side by side. Each grill 3, 4, which can be made, for example, of die-cast aluminium coated with non-stick material, comprises an outer cooking face 28 and an inner face 29. The heating of the grills 3, 4 takes place independently by means of corresponding electric heating elements 5 at the inner face 29 of each grill. Each electric heating element 5 is controlled independently by the user using corresponding control knobs 22 in this example located at the side of grills 3, 4. According to this example, the knobs 22 are rotatable and each has an LED backlit ring configured to switch from a first colour (e.g. red) when heating the corresponding grill 3, 4 to a second colour (e.g. white) when the set temperature is reached. In Figure 1, reference number 9 identifies a box structure housing the electric heating elements 5 and having an upper opening where the grills 3, 4 are arranged. In this example, the grills 3, 4 are only resting on the box structure 9 and can therefore be removed simply by lifting them. Reference number 14 identifies raised splash guard edges extending from the structure 9 opening beyond the grills 3, 4. In the example of Figure 1, there is a lid 8 equipped with a handle 15 movably coupled to the structure 9 to switch between an open position in which the grills 3, 4 are accessible (position visible in Figure 1) and a closed position in which a closed cooking chamber is created around the grills 3, 4. The presence of two grills 3, 4 as shown in Figure 1 is not a limiting feature of this invention. In fact, the barbecue 1 could have only one grill (and thus only one heating element and one control knob), or more than two grills 3, 4 each independent with a corresponding electric heating element and a corresponding knob.

Figure 2 shows some elements of the barbecue in Figure 1. In particular, Figure 2 shows an example of which the electric heating element 5 is made in the form of a coil essentially running along the entire lower face 29 of the corresponding plate 3. For this purpose, housing channels are cut, in a known manner, in the lower face 29 to accommodate the electrical coil 5. In this example in Figure 2, the electric heating element 5 is rotatably coupled to the box structure 9 at a connector 16 configured to allow the plate 3 to move from a position of use parallel to the corresponding grill 3 to an upwardly inclined position of cleaning. In the latter position, once the corresponding grill 3 has been removed, the box structure 9 can be easily accessed. The horizontal position of use is stabilised by means of battens resting on special supports provided in the box structure 9 (e.g. the side edges and a partition wall between the two grills). For each grill 3,4, a temperature sensor 6 is provided at the inner face of the corresponding grill 3, 4. The temperature sensor 6, as known, is configured to control the electric heating elements 5 to maintain a constant cooking temperature as set by the user. In this example in Figure 2, the probe 6 is integral with the electric heating element 5 and is integrated with the connector 16. Finally, Figure 2 shows a grease drip pan 7 that is housed in the structure 9 and is preferably made of dishwasher-safe stainless steel. It is possible to provide a corresponding grease drip pan 7 for each grill, or a single grease drip pan 7 running along all the grills.

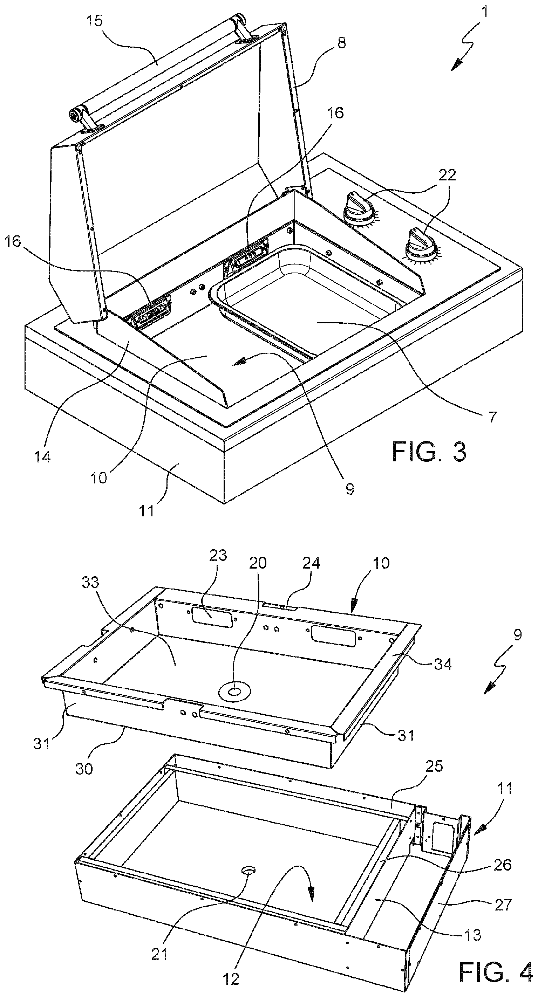

Figure 3 is a schematic view of the barbecue in Figure 1 from which some elements have been removed, namely the plates, heating elements and a grease drip pan. According to this example, the grease drip pans 7 are only supported in the box structure 9.

Figure 4 shows some elements of the barbecue in Figure 1, i.e. the innovative box structure 9 of this invention. As can be seen in Figure 4, and as provided for all barbecues according to this invention, the box structure 9 is a double tank structure comprising an outer tank 11, which represents the built-in or tabletop structure, an inner tank 10 housed in the outer tank 11, and insulation material 12 between the inner tank 10 and the outer tank 11. In this example, the insulation material is in the form of panels essentially covering the entire outer surface (bottom 30 and side walls 31) of the inner tank 10. According to this example, panels of insulation material are made of glass wool, or rock wool or other equivalent, suitable insulation materials. Again, in the example shown in Figure 4, the box structure 9 is provided with a drain hole 21 preferably connectable to a water drainage network to facilitate washing of the inner surface of the bottom 33 of the inner tank 10. In this example, the inner tank 10 comprises edges 34 welded to the outer tank 11 to ensure the seal against liquids. The inner tank 10 and/or outer tank 11 of this example are preferably made of stainless steel. According to the example shown in Figure 4, the outer tank 11 is larger than the inner tank 10 and is provided with at least one partition wall 13, 25 to separate the area housing the inner tank 10 from the rest of the outer tank 11. The side area of the outer tank 11 not occupied by the inner tank 10 is used to house the electronic control unit of the electric barbecue 1. For this purpose, in the example shown, reference number 27 identifies an opening door for inspecting the electronic control unit. Finally, in this example there is a gap 26 between the partition walls 13, 25 and, in general, the outer tank and the insulation material 12 (in contact with the inner tank). The holes 23 and openings 24 of the inner tank house connectors 16 and hinges of the lid 8 respectively.

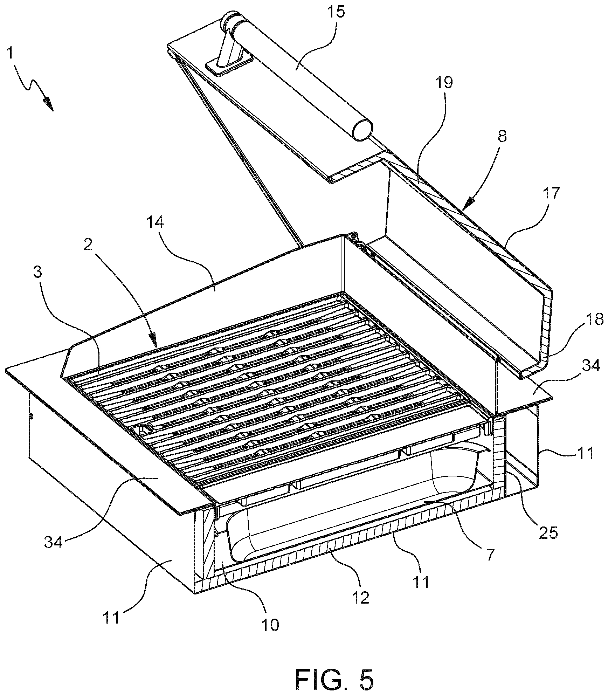

Figure 5 is a cross-section view of the barbecue from Figure 1 where, in addition to the insulation provided in the box structure 9, insulation is also provided in the lid 8. In this example, the lid 8 is actually a double-lid comprising an external wall 17, an internal wall 18, and insulation material 19 between the internal wall 18 and the external wall 17. As with the double tank structure 9, the insulation 19 of the lid is preferably glass wool. In this example, the external wall 17 is made of stainless steel and the internal wall 18 is made of dark enamelled stainless steel.

It is clear that modifications and variations may be made to the example shown in the figures of the invention described herein. In fact, the main aspect of this invention lies in its having insulated the heating element housing tank structure and, preferably but without imposing limits, the lid.

## Claims

1. An electric barbecue (1), in particular a built-in or tabletop electric barbecue suitable for indoor or outdoor use; wherein the electric barbecue (1) comprises:
- a grill (3, 4) or several grills (3, 4) placed side by side, each grill (3, 4) comprising an outer cooking face (28) and an inner face (29);
- at the inner face (29) of each grill (3, 4), an electric heating element (5) being provided, preferably independently controlled;
- a box structure (9) housing the at least one electrical heating element (5) and equipped with an upper opening where the at least one grill (3, 4) is arranged;
wherein the box structure (9) is a double tank structure comprising:
- an outer tank (11);
- an inner tank (10) housed in the outer tank (11);
- insulation material (12) between the inner tank (10) and the outer tank (11);
wherein the inner tank (10) comprises a bottom wall (30) and the side walls (31) orthogonal to the bottom wall (30); wherein for each grill (3, 4) there is a grease drip pan (7) housed in the inner tank (10).

2. The electric barbecue (1) as claimed in claim 1, wherein the insulation material is in the form of panels covering substantially the entire outer surface (30, 31) of the inner tank (10).

3. The electric barbecue (1) as claimed in claim 1 or 2, wherein the insulation material is glass wool.

4. The electric barbecue (1) as claimed in any one of the preceding claims, wherein each grill (3, 4) is liftable from the box structure (9).

5. The electric barbecue (1) as claimed in any one of the preceding claims, wherein each grease drip pan (7) is made of dishwasher-safe stainless steel.

6. The electric barbecue (1) as claimed in claim 1, wherein each grease drip pan (7) is liftable from the box structure (9).

7. The electric barbecue (1) as claimed in any one of the preceding claims, wherein each electrical heating element (5) is rotatably coupled to the box structure (9) to move from a position of use parallel to the corresponding grill (3, 4) to a position of cleaning inclined upwards to allow, once the corresponding grill (3, 4) is removed, easy access to the box structure (9).

8. The electric barbecue (1) as claimed in any one of the preceding claims, wherein raised splash guard edges are provided at the opening of the box structure (9).

9. The electric barbecue (1) as claimed in any one of the preceding claims, wherein the box structure (9) is provided with a drain hole preferably connectable to a water drainage network to facilitate washing of the inner surface (33) of the inner tank (10).

10. The electric barbecue (1) as claimed in any one of the preceding claims, wherein the inner tank (10) comprises edges welded to the outer tank (11) for sealing against liquids.

11. The electric barbecue (1) as claimed in any one of the preceding claims, wherein the inner tank (10) and/or the outer tank (11) are made of stainless steel.

12. The electric barbecue (1) as claimed in any one of the preceding claims, wherein the outer tank (11) is larger than the inner tank (10), the at least one partition wall (13, 25) being provided to separate the area housing the inner tank (10) from the rest of the outer tank (11); the at least one area of the outer tank (11) not occupied by the inner tank (10) being configured to house the electronic control unit of the electric barbecue (1).

13. The electric barbecue (1) as claimed in claim 12, wherein the outer tank (11) comprises an opening door for inspection of the area of the inner tank housing the electronic control unit of the electric barbecue (1).

14. The electric barbecue (1) as claimed in claim 12 or 13, wherein a gap (26) is present between the partition wall (13, 25) and the insulation material (12).

15. The electric barbecue (1) as claimed in any one of the preceding claims, wherein the electric barbecue (1) comprises a lid (8) movable between an open position wherein the at least one grill (3, 4) is accessible to the user and a closed position wherein it creates a closed cooking chamber at the at least one grill (3, 4).

16. The electric barbecue (1) as claimed in claim 15, wherein the lid (8) is a double-lid comprising:
- an external wall (17);
- an internal wall (18);
- insulation material (19) between the inner wall (18) and the outer wall (17).

17. The electric barbecue (1) as claimed in claim 16, wherein the insulation material (19) is glass wool.

18. The electric barbecue (1) as claimed in claim 16 or 17, wherein the outer wall (17) is made of stainless steel and the inner wall (18) is made of dark enamelled stainless steel.
